# EUROPEAN PATENT SPECIFICATION

(11) **EP 1 857 505 B1**
(45) Date of publication and mention of the grant of the patent: **17.08.2016**
(21) Application number: 05720268.1
(22) Date of filing: 08.03.2005
(51) Int. Cl.: C08L 67/06, C08G 63/547, C08F 283/01, F21V 7/22, C09D 167/06

(54) **UNSATURATED POLYESTER RESIN COMPOSITION FOR LAMP REFLECTORS AND MOLDINGS THEREOF**
UNGESÄTTIGTES POLYESTERHARZ ENTHALTENDE ZUSAMMENSETZUNG FÜR LAMPENREFLEKTOREN UND FORMKÖRPER DARAUS
COMPOSITION DE RÉSINE DE POLYESTER INSATURÉ POUR DES RÉFLECTEURS DE LAMPES ET ARTICLES MOULÉS FORMÉS À PARTIR DE CELLE-CI

(43) Date of publication of application: 21.11.2007
(73) Proprietor: Showa Denko K.K., Tokyo 105-8518 (JP)
(72) Inventor: YAMANE, Kunio, Tatsuno-shi Hyogo 679-4155 (JP); KANEOKA, Hidekazu, Showa Highpolymer Co., Ltd., Tatsuno-shi, Hyogo 679-4155 (JP)
(74) Representative: Hoffmann Eitle
(86) International application number: PCT/JP2005/003996
(87) International publication number: WO 2006/095414

(56) References cited:
- EP-A2- 0 028 841
- JP-A- 3 285 946
- JP-A- 5 247 333
- DATABASE WPI Week 199953 Thomson Scientific, London, GB; AN 1999-615596 XP002733907, -& JP H11 269236 A (HITACHI CHEM CO LTD) 5 October 1999 (1999-10-05)
- DATABASE WPI Week 200005 Thomson Scientific, London, GB; AN 2000-057699 XP002733908, -& JP H11 314312 A (SHOWA HIGH POLYMER CO LTD) 16 November 1999 (1999-11-16)

## Description

### Technical Field

The present invention relates to unsaturated polyester resin compositions for lamp reflectors and molded articles thereof. More particularly, it relates to unsaturated polyester resin compositions for lamp reflectors typified by automotive head lamps, and molded articles thereof.

### Background Art

Conventionally, unsaturated polyester resin molding materials (bulk molding compounds: BMC) have excellent surface smoothness, dimensional accuracy, moldability, heat resistance, mechanical strength, etc., so that they are widely used for OA equipment, chassis for office equipment, lamp reflectors typified by automotive head lamps, etc.

As these unsaturated polyester resin molding materials, for example, materials adding polystyrenes and styrene-diene block copolymers and/or hydrogenated or modified styrene-diene block copolymers to unsaturated polyester resins (for example, refer to Reference 1), and materials adding styrene-vinyl acetate block copolymers and styrene-diene block copolymers and/or hydrogenated or modified styrene-diene block copolymers to unsaturated polyester resins (for example, refer to Reference 2) are disclosed.

Upon manufacturing lamp reflectors, surfaces of molded articles obtained from unsaturated polyester resin molding materials are coated with paint (under coat), and the coated surfaces are further coated with metals such as aluminium, zinc, etc. Therefore, in unsaturated polyester resin molding materials for lamp reflectors, excellent coating properties in addition to excellent surface smoothness, dimensional accuracy, moldability, heat resistance and mechanical strength are required.

However, conventional unsaturated polyester resin molding materials have problems of low coating property, and causing "repelling" of paints.

[Reference 1] Japanese Patent No. 6-53844
[Reference 2] Japanese Patent No. 6-89240

### Disclosure of the invention

### Problem to be solved by the invention

Accordingly, an object of the present invention is to provide unsaturated polyester resin compositions for lamp reflectors and molded articles thereof, which have excellent coating properties in addition to excellent surface smoothness, dimensional accuracy, moldability, heat resistance and mechanical strength.

### Means for solving problem

The inventors of the present invention as a result of earnest investigation have achieved the above object. As a result, the inventors have found that the above problems can be resolved by adding a diallyl phthalate monomer or prepolymer, a radically polymerizable unsaturated monomer other than the diallyl phthalate monomer, a polystyrene and/or a styrene-vinyl acetate block copolymer, and a styrene-diene block copolymer and/or a hydrogenated or modified styrene-diene block copolymer at certain ratios to an unsaturated polyester resin.

That is, the present invention is an unsaturated polyester resin composition for lamp reflectors comprising (a) an unsaturated polyester resin, (b) a diallyl phthalate monomer or prepolymer, (c) a radically polymerizable unsaturated monomer other than the diallyl phthalate monomer, (d) a polystyrene and/or a styrene-vinyl acetate block copolymer, and (e) a styrene-diene block copolymer and/or a hydrogenated or modified styrene-diene block copolymer, characterized in that the composition comprises from 20 to 60 parts by weight of (b) and (c), and from 13 to 34 parts by weight of (d) and (e) based on 100 parts by weight of (a), (b), (c), (d) and (e), and the ratio by weight of (b) to (c) is 5:95 to 25:75, and the ratio by weight of (d) to (e) is 20:80 to 80:20.

Further, molded articles of the present invention are characterized by being obtained by molding the above unsaturated polyester resin compositions for lamp reflectors.

### Effect of the invention

According to the present invention, unsaturated polyester resin compositions for lamp reflectors and molded articles thereof, which have excellent coating properties in addition to excellent surface smoothness, dimensional accuracy, moldability, heat resistance and mechanical strength can be provided by the above constitution.

### Brief description of the drawings

- Fig. 1: is a plan view illustrating a test box used in the Examples.
- Fig. 2: is a cross-sectional view illustrating the A-A' line of Figure 1.

### Preferred Embodiments of the Invention

Unsaturated polyester resin compositions for lamp reflectors of the present invention comprise (a) an unsaturated polyester resin, (b) a diallyl phthalate monomer or prepolymer, (c) a radically polymerizable unsaturated monomer other than the diallyl phthalate monomer, (d) a polystyrene and/or a styrene-vinyl acetate block copolymer, and (e) a styrene-diene block copolymer and/or a hydrogenated or modified styrene-diene block copolymer.

The kind of (a) unsaturated polyester resin used in the present invention is not particularly limited. For the unsaturated polyester resin used in the present invention, appropriate resins which polycondense a polyalcohol with an unsaturated polybasic acid and/or a saturated polybasic acid, and are usually used as a molded material can be used. Also, a vinyl ester resin and a diallyl phthalate resin may be blended as a part of the unsaturated polyester resin.

Examples of polyalcohols which can form the unsaturated polyester resin include ethylene glycol, propylene glycol, neopentyl glycol, butanediol, diethylene glycol, dipropylene glycol, triethylene glycol, pentanediol, hexanediol, neopentanediol, hydrogenated bisphenol A, bisphenol A, and glycerin. Among them, propylene glycol, neopentyl glycol and bisphenol A or hydrogenated bisphenol A are preferable in view of heat resistance, mechanical strength, and moldability.

Examples of the unsaturated polybasic acid include maleic anhydride, fumaric acid, citraconic acid, and itaconic acid. Also, examples of the saturated polybasic acid include phthalic anhydride, isophthalic acid, terephtalic acid, chlorendic acid, succinic acid, adipic acid, sebacic acid, tetrachloro phthalic anhydride, tetrabromo phthalic anhydride, endmethylenetetrahydro phthalic anhydride, etc. Among them, unsaturated polybasic acid is preferable, and maleic anhydride and fumaric acid are more preferable in view of heat resistance, mechanical strength, and moldability.

Further, in view of further improving the heat resistance, mechanical strength, moldability, etc., it is preferable to use an unsaturated polyester resin obtained by polycondensing a total of 100 moles consisting of 20 to 50 moles of propylene glycol, 25 to 65 moles of neopentyl glycol and 15 to 25 moles of bisphenol A or hydrogenated bisphenol A based on 100 moles of at least one unsaturated polybasic acid selected from a group consisting of fumaric acid and maleic anhydride.

The (b) diallyl phthalate monomer or prepolymer, and the (c) radical polymeric unsaturated monomer other than the diallyl phthalate monomer used in the present invention are crosslinking agents. Examples of the (c) radical polymeric unsaturated monomer other than the diallyl phthalate monomer include styrene monomer, methyl methacrylate, and triallyl isocyanurate.

The unsaturated polyester resin compositions comprise from 20 to 60 parts by weight, preferably from 25 to 55 parts by weight, more preferably from 30 to 55 parts by weight of (b) and (c) as the crosslinking agents, based on 100 parts by weight of (a)-(e), in view of improving coating properties in addition to workability, polymeric property, and shrinkage property of the molded articles and flexibility of the addition amount. If the amount of (b) and (c) is less than 20 parts by weight, the materials become rigid, and then the mixture thereof cannot be performed or molding shrinkage ratio becomes high. Reversely, the amount of (b) and (c) is more than 60 parts by weight, the materials become flexible, and then moldability deceases or heat resistance decreases.

Further, the ratio of (b) to (c) is 5:95 to 25:75, preferably 10:90 to 20:80. If the ratio of (b) to (c) is too low, coating properties decrease. Reversely, if the ratio of (b) to (c) is too high, moldability decreases.

The (d) polystyrene used in the present invention means a polymer consisting of styrene, and can be properly selected from known polystyrenes used as thermoplastic resins. Among them, polystyrenes having a weight average molecular weight of 2,000 to 400,000 are preferable. Examples of such polystyrenes include Haika ST-95 (trade name) marketed by Sanyo Chemical Industries, Ltd., Daiyarex HF-55 (trade name) marketed by Mitsubishi Chemical, Co. Ltd., Staylon 679 (trade name) marketed by Asahikasei Co. Ltd., Sbright T-2 beads (trade name) marketed by Showadenko Co. Ltd., etc. Further, in the (d) styrene-vinyl acetate block copolymer used in the present invention, the ratio of vinyl acetate is preferably 50% or less. If the ratio of vinyl acetate is more than 50%, it is difficult to obtain the desired moldability. In addition, styrene-vinyl acetate block copolymers having a weight average molecular weight of 100,000 to 300,000 are preferable.

The (e) styrene-diene block copolymers and/or hydrogenated or modified styrene-diene block copolymers used in the present invention are SBS or SIS thermoplastic elastomer using polystyrene as a hard segment and polybutadiene or polyisoprene as a soft segment, or hydrogenated materials hydrogenating the SBS or SIS thermoplastic elastomer. As SEBS thermoplastic elastomer or modified materials thereof, reactive saturated thermoplastic elastomer which reactivity is provided to the above thermoplastic elastomer by using maleic acid anhydride, can be used. Further, mixtures thereof can be used.

Linking modes of styrene-diene block copolymers are broadly divided into a type in which polystyrene moieties and diene polymer moieties are a linear linking mode and a radial type in which diene polymer moieties are coupled with each other. In the present invention, both types can be used. As for the ratio of styrene moieties to diene moieties, the styrene moieties are preferably 10% to 50% of the total. If the ratio of the styrene moieties is less than 10% or more than 50%, it is difficult to obtain the desired shrinkage ratio. In addition, styrene-diene block copolymers having a weight average molecular weight of 100,000 to 400,000 are preferable.

The unsaturated polyester resin compositions comprise from 13 to 34 parts by weight, preferably 15 to 32 parts by weight, more preferably 18 to 30 parts by weight of (d) a polystyrene and/or a styrene-vinyl acetate block copolymer, and (e) a styrene-diene block copolymer and/or a hydrogenated or modified styrene-diene block copolymer based on 100 parts by weight of (a)-(e). If the amount of (d) and (e) is less than 13 parts by weight, shrinkage of the unsaturated polyester resin compositions increases upon curing. Reversely, if the amount of (d) and (e) is more than 34 parts by weight, colorability of the unsaturated polyester resin compositions decreases.

Further, the ratio by weight of (d) to (e) is 20:80 to 80:20, preferably 30:70 to 70:30. If the ratio of (d) to (e) is too low, shrinkage of the unsaturated polyester resin compositions increases upon curing, and the colorability may decrease. Reversely, if the ratio of (d) to (e) is too high, excellent colorability is obtained, but shrinkage of the unsaturated polyester resin compositions increases upon curing.

In view of handling, it is generally easy to use (d) a polystyrene and/or a styrene-vinyl acetate block copolymer, and (e) a styrene-diene block copolymer and/or a hydrogenated or modified styrene-diene block copolymer which are pre-dissolved or pre-swelled in the above crosslinking agents such as styrene. However, (d) and (e) which are not pre-dissolved or pre-swelled in the above crosslinking agents such as styrene, may also be used.

In the unsaturated polyester resin composition of the present invention, if necessary, curing agents, fillers, mold lubricants, thickeners, fiber reinforcements, pigments , may be used together with the above ingredients. If these ingredients are used, each of the ingredients is added to the unsaturated polyester resin composition in amounts which are normally used according to various purposes.

As the curing agent, an appropriate peroxide can be used. Examples of the peroxide include t-butyl peroxyoctoate, benzoyl peroxide, 1,1-di-t-butylperoxy-3,3,5-trimethyl cyclohexane, t-butylperoxyisopropylcarbonate, t-butylperoxybenzoate, dicumylperoxide, and di-t-butylperoxide.

As the fillers, for example, inorganic powders such as silica, alumina, mica, aluminum hydroxide, calcium carbonate, gypsum, barium sulfate, clay, and talc, can be used.

As the mold lubricant, for example, stearic acid, oleic acid, zinc stearate, calcium stearate, aluminum stearate, magnesium stearate, stearic acid amide, oleic acid amide, carnauba wax, silicone oil, synthetic wax can be used.

Examples of the thickener include metal oxides such as magnesium oxide, magnesium hydroxide, calcium hydroxide, calcium oxide, and isocyanate compounds.

As the fiber reinforcement, chopped strand glass cut to about 1.5 to 25 mm fiber length can be used. Also, organic and inorganic fibers such as pulp fiber, Tetoron® fiber, vinylon fiber, carbon fiber, aramid fiber, wollastonite, can be used.

The unsaturated polyester resin composition of the present invention constituted by the above ingredients can be obtained using normal mixing methods, for example by using kneaders.

The molded articles of the present invention can be obtained from the unsaturated polyester resin composition of the present invention. As the molded articles have excellent coating properties in addition to excellent surface smoothness, dimensional accuracy, moldability, heat resistance and mechanical strength, they are thereby provided with a high level of the properties required of lamp reflectors.

The molded articles of the present invention can be easily obtained by molding the unsaturated polyester resin composition of the present invention according to usual methods. Examples of such molding methods include compression molding, transfer molding, and injection molding.

### Examples

The present invention will now be explained with reference to the Examples and Comparative Examples.

In Examples 1-30, the addition ingredients shown in Tables 1-4 were used in the respective amounts shown therein. The ingredients were mixed by using a double-cup type kneader at 30°C, to thereby obtain unsaturated polyester resin compositions.
Resin I used in Examples 1-11, 14-26 and 29-30 comprises 70% by weight of an unsaturated polyester resin obtained by polycondensing fumaric acid/propylene glycol/neopentyl glycol/hydrogenated bisphenol A at the ratio of 100mol/35mol/45mol/20mol, and 30% by weight of a styrene monomer as a crosslinking agent.
Resin II used in Examples 12 and 27 comprises 70% by weight of an unsaturated polyester resin obtained by polycondensing fumaric acid/propylene glycol/neopentyl glycol/hydrogenated bisphenol A at the ratio of 100mol/25mol/60mol/15mol, and 30% by weight of a styrene monomer as a crosslinking agent.
Resin III used in Examples 13 and 28 comprises 70% by weight of an unsaturated polyester resin obtained by polycondensing fumaric acid/propylene glycol/neopentyl glycol/hydrogenated bisphenol A at the ratio of 100mol/50mol/25mol/25mol, and 30% by weight of a styrene monomer as a crosslinking agent.

These compositions were evaluated for molding shrinkage ratio, moldability, surface smoothness and coating property. The testing and evaluation methods were as follows.

### (1) Molding shrinkage ratio

Shrinkage disks defined in JIS K6911 5.7 were obtained by compression molding at a molding temperature of 150°C under a molding pressure of 10MPa for a molding time of 3 minutes. Then, the molding shrinkage ratio was calculated based on JIS K6911 5.7.

### (2) Moldability

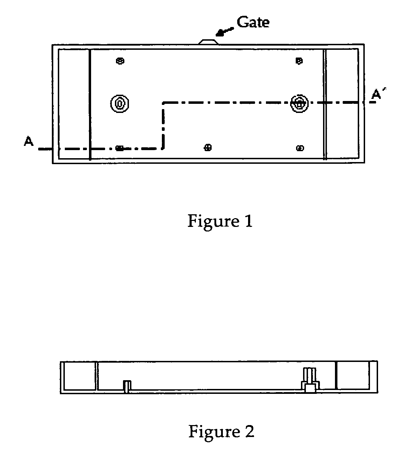

The injection molding was carried out by using an injection molding machine (Niigata Tekkousho Co., Ltd.; NNT250PSCH 7000) in the Test box (360×120×25mm, wall thickness: 4mm in a long edge side, 5mm in a short edge side, 3mm in a bottom) shown in Figures 1 and 2 at a molding temperature of 160°C under an injection pressure of 30MPa for a molding time of 2 minutes. The colorability, leveling and filling property were visually evaluated.

### (3) Coating property

The cross-cut adhesion test defined under Adhesion of JIS K5400 8.5 (cut interval: 1mm) was carried out by using the Test box molding articles used in (2) above. The test was evaluated by the evaluation points defined under Adhesion (Table 18) of JIS K5400 8.5.

### (4) Heat resistance

The bending test pieces defined in JIS K6911 5.17 (Fig. 24) were kept in the hot blast cycling drier at 180°C for 1000 hours. After taking the bending test pieces out of the drier, the bending strength was measured based on the method defined in JIS K6911 5.17. The bending strength was evaluated by strength retentions to initial properties.

The results of the above measurement evaluation are shown in Tables 1-4.

**[Table 1]**

| Table 1 | | | | | | | | | |
|---|---|---|---|---|---|---|---|---|---|
| | | Ex.1 | Ex. 2 | Ex. 3 | Ex.4 | Ex. 5 | Ex. 6 | Ex. 7 | Ex. 8 |
| Resin I¹⁾ | | 71.5 | 71.5 | 71.5 | 71.5 | 93 | 43 | 71.5 | 71.5 |
| Polystyrene (Mw=200,000) | | 15 | 15 | 15 | 15 | 15 | 15 | 15 | 6 |
| styrene-butadiene block copolymer (Mw=300,000) | | 15 | 15 | 15 | 15 | 15 | 15 | 15 | 24 |
| styrene monomer | | 26 | 23.5 | 18.5 | 16 | 5.3 | 39.5 | 23.5 | 23.5 |
| diallyl phthalate monomer | | 2.5 | 5 | 10 | 12.5 | 1.7 | 17.5 | --- | 5 |
| diallyl phthalate prepolymer | | --- | --- | --- | --- | --- | --- | 5 | --- |
| t-butylperoxybenzoate | | 2 | 2 | 2 | 2 | 2 | 2 | 2 | 2 |
| Calcium carbonate | | 300 | 300 | 300 | 300 | 300 | 300 | 300 | 300 |
| Zinc stearate | | 7.5 | 7.5 | 7.5 | 7.5 | 7.5 | 7.5 | 7.5 | 7.5 |
| Chopped glass (6mm) | | 100 | 100 | 100 | 100 | 100 | 100 | 100 | 100 |
| Carbon black | | 2.5 | 2.5 | 2.5 | 2.5 | 2.5 | 2.5 | 2.5 | 2.5 |
| (b): (c) | | 5:95 | 10:90 | 20:80 | 25:75 | 5:95 | 25:75 | 10:90 | 10:90 |
| Parts by weight of (b)+(c) based on 100 parts by weight of (a)-(e) | | 38 | 38 | 38 | 38 | 27 | 54 | 38 | 38 |
| (d): (e) | | 50:50 | 50:50 | 50:50 | 50:50 | 50:50 | 50:50 | 50:50 | 20:80 |
| Parts by weight of (d)+(e) based on 100 parts by weight of (a)-(e) | | 23 | 23 | 23 | 23 | 23 | 23 | 23 | 23 |
| Molding shrinkage ratio (%) | | -0.02 | -0.02 | -0.02 | -0.02 | -0.01 | -0.03 | -0.02 | -0.02 |
| Test box appearance ²⁾ | Colorability | ⊚ | ⊚ | ⊚ | ⊚ | ⊚ | ⊚ | ⊚ | ⊚ |
| | Leveling | ⊚ | ⊚ | ⊚ | ⊚ | ⊚ | ⊚ | ⊚ | ⊚ |
| | filling property | ⊚ | ⊚ | ⊚ | ⊚ | ○ | ○ | ⊚ | ⊚ |
| Coating property³⁾ | Point | 8 | 9 | 9 | 10 | 7 | 10 | 9 | 9 |
| | Assessment | ○ | ⊚ | ⊚ | ⊚ | ○ | ⊚ | ⊚ | ⊚ |
| Heat resistance Bending strength ⁴⁾ | retention (%) | 96 | 95 | 95 | 94 | 96 | 90 | 95 | 92 |
| | Assessment | ⊚ | ⊚ | ⊚ | ⊚ | ⊚ | ⊚ | ⊚ | ⊚ |

| | | | | | | | | | |
|---|---|---|---|---|---|---|---|---|---|
| 1) Styrene monomer content: 30wt% 2) Test box appearance: ⊚ very good, ○ good, Δ inferior, × defect 3) Coating property assessment: ⊚ 9 or more, ○ 8-7, Δ 6-5, × 4 or less 4) Heat resistance assessment: ⊚ 90% or more, ○ more than 80% and less than 90%, Δ more than 70% and less than 80%, × less than 70% | | | | | | | | | |

**[Table 2]**

| Table 2 | | | | | | | | |
|---|---|---|---|---|---|---|---|---|
| | | Ex. 9 | Ex.10 | Ex. 11 | Ex. 12 | Ex. 13 | Ex. 14 | Ex.15 |
| Resin I¹⁾ | | 71.5 | 71.5 | 71.5 | --- | --- | 71.5 | 71.5 |
| Resin II¹⁾ | | --- | --- | --- | 71.5 | --- | --- | --- |
| Resin III¹⁾ | | --- | --- | --- | --- | 71.5 | --- | --- |
| Polystyrene (Mw=200,000) | | 24 | 10.5 | 35 | 15 | 15 | 15 | 15 |
| styrene-butadiene block copolymer (Mw=300,000) | | 6 | 4.5 | 15 | 15 | 15 | --- | --- |
| styrene-isoprene block copolymer (Mw=300,000) | | --- | --- | --- | --- | --- | 15 | --- |
| styrene-ethylene/butylene-styrene block copolymer (Mw=300,000) | | --- | --- | --- | --- | --- | --- | 15 |
| styrene monomer | | 23.5 | 23.5 | 23.5 | 23.5 | 23.5 | 23.5 | 23.5 |
| diallyl phthalate monomer | | 5 | 5 | 5 | 5 | 5 | 5 | 5 |
| t-butylperoxybenzoate | | 2 | 2 | 2 | 2 | 2 | 2 | 2 |
| Calcium carbonate | | 300 | 300 | 300 | 300 | 300 | 300 | 300 |
| Zinc stearate | | 7.5 | 7.5 | 7.5 | 7.5 | 7.5 | 7.5 | 7.5 |
| Chopped glass (6mm) | | 100 | 100 | 100 | 100 | 100 | 100 | 100 |
| Carbon black | | 2.5 | 2.5 | 2.5 | 2.5 | 2.5 | 2.5 | 2.5 |
| (b): (c) | | 10:90 | 10:90 | 10:90 | 10:90 | 10:90 | 10:90 | 10:90 |
| Parts by weight of (b)+(c) based on 100 parts by weight of (a)-(e) | | 38 | 43 | 33 | 38 | 38 | 38 | 38 |
| (d):(e) | | 80:20 | 70:30 | 70:30 | 50:50 | 50:50 | 50:50 | 50:50 |
| Parts by weight of (d)+(e) based on 100 parts by weight of (a)-(e) | | 23 | 13 | 33 | 23 | 23 | 23 | 23 |
| Molding shrinkage ratio | (%) | -0.01 | -0.001 | -0.05 | -0.015 | -0.015 | -0.022 | -0.025 |
| Test box appearance²⁾ | Colorability | ⊚ | ⊚ | ⊚ | ⊚ | ⊚ | ⊚ | ⊚ |
| | Leveling | ⊚ | ⊚ | ⊚ | ⊚ | ⊚ | ⊚ | ⊚ |
| | filling property | ⊚ | ⊚ | ○ | ○ | ○ | ⊚ | ⊚ |
| Coating property³⁾ | Point | 9 | 9 | 9 | 9 | 9 | 9 | 9 |
| | Assessment | ⊚ | ⊚ | ⊚ | ⊚ | ⊚ | ⊚ | ⊚ |
| Heat resistance Bending strength⁴⁾ | retention (%) | 96 | 97 | 93 | 95 | 95 | 95 | 95 |
| | Assessment | ⊚ | ⊚ | ⊚ | ⊚ | ⊚ | ⊚ | ⊚ |

| | | | | | | | | |
|---|---|---|---|---|---|---|---|---|
| 1) Styrene monomer content: 30wt% 2) Test box appearance: ⊚ very good, ○ good, Δ inferior, × defect 3) Coating property assessment: ⊚ 9 or more, ○ 8-7, Δ 6-5, × 4 or less 4) Heat resistance assessment: ⊚ 90% or more, ○ more than 80% and less than 90%, Δ more than 70% and less than 80%, × less than 70% | | | | | | | | |

**[Table 3]**

| Table 3 | | | | | | | | | |
|---|---|---|---|---|---|---|---|---|---|
| | | Ex. 16 | Ex. 17 | Ex. 18 | Ex. 19 | Ex. 20 | Ex. 21 | Ex. 22 | Ex. 23 |
| Resin I¹⁾ | | 71.5 | 71.5 | 71.5 | 71.5 | 93 | 43 | 71.5 | 71.5 |
| styrene-vinyl acetate block copolymer (Mw=200,000) | | 15 | 15 | 15 | 15 | 15 | 15 | 15 | 6 |
| styrene-butadiene block copolymer (Mw=300,000) | | 15 | 15 | 15 | 15 | 15 | 15 | 15 | 24 |
| styrene monomer | | 26 | 23.5 | 18.5 | 16 | 5.3 | 39.5 | 23.5 | 23.5 |
| diallyl phthalate monomer | | 2.5 | 5 | 10 | 12.5 | 1.7 | 17.5 | --- | 5 |
| diallyl phthalate prepolymer | | --- | --- | --- | --- | --- | --- | 5 | --- |
| t-butylperoxybenzoate | | 2 | 2 | 2 | 2 | 2 | 2 | 2 | 2 |
| Calcium carbonate | | 300 | 300 | 300 | 300 | 300 | 300 | 300 | 300 |
| Zinc stearate | | 7.5 | 7.5 | 7.5 | 7.5 | 7.5 | 7.5 | 7.5 | 7.5 |
| Chopped glass (6mm) | | 100 | 100 | 100 | 100 | 100 | 100 | 100 | 100 |
| Carbon black | | 2.5 | 2.5 | 2.5 | 2.5 | 2.5 | 2.5 | 2.5 | 2.5 |
| (b): (c) | | 5:95 | 10:90 | 20:80 | 25:75 | 5:95 | 25:75 | 10:90 | 10:90 |
| Parts by weight of (b)+(c) based on 100 parts by weight of (a)-(e) | | 38 | 38 | 38 | 38 | 27 | 54 | 38 | 38 |
| (d): (e) | | 50:50 | 50:50 | 50:50 | 50:50 | 50:50 | 50:50 | 50:50 | 20:80 |
| Parts by weight of (d)+(e) based on 100 parts by weight of (a)-(e) | | 23 | 23 | 23 | 23 | 23 | 23 | 23 | 23 |
| Molding shrinkage ratio (%) | | -0.02 | -0.02 | -0.02 | -0.02 | -0.01 | -0.03 | -0.02 | -0.02 |
| Test box appearance²⁾ | Colorability | ⊚ | ⊚ | ⊚ | ⊚ | ⊚ | ⊚ | ⊚ | ⊚ |
| | Leveling | ⊚ | ⊚ | ⊚ | ⊚ | ⊚ | ⊚ | ⊚ | ⊚ |
| | filling property | ⊚ | ⊚ | ⊚ | ⊚ | ○ | ○ | ⊚ | ⊚ |
| Coating property³⁾ | Point | 8 | 9 | 9 | 10 | 7 | 10 | 9 | 9 |
| | Assessment | ○ | ⊚ | ⊚ | ⊚ | ○ | ⊚ | ⊚ | ⊚ |
| Heat resistance Bending strength⁴⁾ | retention (%) | 96 | 95 | 95 | 94 | 96 | 90 | 95 | 92 |
| | Assessment | ⊚ | ⊚ | ⊚ | ⊚ | ⊚ | ⊚ | ⊚ | ⊚ |

| | | | | | | | | | |
|---|---|---|---|---|---|---|---|---|---|
| 1) Styrene monomer content: 30wt% 2) Test box appearance: ⊚ very good, ○ good, Δ inferior, × defect 3) Coating property assessment: ⊚ 9 or more, ○ 8-7, Δ 6-5, × 4 or less 4) Heat resistance assessment: ⊚ 90% or more, ○ more than 80% and less than 90%, Δ more than 70% and less than 80%, × less than 70% | | | | | | | | | |

**[Table 4]**

| Table 4 | | | | | | | | |
|---|---|---|---|---|---|---|---|---|
| | | Ex. 24 | Ex. 25 | .Ex. 26 | Ex. 27 | Ex. 28 | Ex. 29 | Ex. 30 |
| Resin I¹⁾ | | 71.5 | 71.5 | 71.5 | --- | --- | 71.5 | 71.5 |
| Resin II¹⁾ | | --- | --- | --- | 71.5 | --- | --- | --- |
| Resin III¹⁾ | | --- | --- | --- | --- | 71.5 | --- | --- |
| styrene-vinyl acetate block copolymer (Mw=200,000) | | 24 | 10.5 | 35 | 15 | 15 | 15 | 15 |
| styrene-butadiene block copolymer (Mw=300,000) | | 6 | 4.5 | 15 | 15 | 15 | --- | --- |
| styrene-isoprene block copolymer (Mw=300,000) | | --- | --- | --- | --- | --- | 15 | --- |
| styrene-ethylene/butylene-styrene block copolymer (Mw=300,000) | | --- | --- | --- | --- | --- | --- | 15 |
| styrene monomer | | 23.5 | 23.5 | 23.5 | 23.5 | 23.5 | 23.5 | 23.5 |
| diallyl phthalate monomer | | 5 | 5 | 5 | 5 | 5 | 5 | 5 |
| t-butylperoxybenzoate | | 2 | 2 | 2 | 2 | 2 | 2 | 2 |
| Calcium carbonate | | 300 | 300 | 300 | 300 | 300 | 300 | 300 |
| Zinc stearate | | 7.5 | 7.5 | 7.5 | 7.5 | 7.5 | 7.5 | 7.5 |
| Chopped glass (6mm) | | 100 | 100 | 100 | 100 | 100 | 100 | 100 |
| Carbon black | | 2.5 | 2.5 | 2.5 | 2.5 | 2.5 | 2.5 | 2.5 |
| (b): (c) | | 10:90 | 10:90 | 10:90 | 10:90 | 10:90 | 10:90 | 10:90 |
| Parts by weight of (b)+(c) based on 100 parts by weight of (a)-(e) | | 38 | 43 | 33 | 38 | 38 | 38 | 38 |
| (d): (e) | | 80:20 | 70:30 | 70:30 | 50:50 | 50:50 | 50:50 | 50:50 |
| Parts by weight of (d)+(e) based on 100 parts by weight of (a)-(e) | | 23 | 13 | 33 | 23 | 23 | 23 | 23 |
| Molding shrinkage ratio (%) | | -0.01 | -0.001 | -0.05 | -0.015 | -0.015 | -0.022 | -0.025 |
| Test box appearance²⁾ | Colorability | ⊚ | ⊚ | ⊚ | ⊚ | ⊚ | ⊚ | ⊚ |
| | Leveling | ⊚ | ⊚ | ⊚ | ⊚ | ⊚ | ⊚ | ⊚ |
| | filling property | ⊚ | ⊚ | ○ | ○ | ○ | ⊚ | ⊚ |
| Coating property³⁾ | Point | 9 | 9 | 9 | 9 | 9 | 9 | 9 |
| | Assessment | ⊚ | ⊚ | ⊚ | ⊚ | ⊚ | ⊚ | ⊚ |
| Heat resistance Bending strength⁴⁾ | retention (%) | 96 | 97 | 93 | 95 | 95 | 95 | 95 |
| | Assessment | ⊚ | ⊚ | ⊚ | ⊚ | ⊚ | ⊚ | ⊚ |

| | | | | | | | | |
|---|---|---|---|---|---|---|---|---|
| 1) Styrene monomer content: 30wt% 2) Test box appearance: ⊚ very good, ○ good, Δ inferior, × defect 3) Coating property assessment: ⊚ 9 or more, ○ 8-7, Δ 6-5, × 4 or less 4) Heat resistance assessment: ⊚ 90% or more, ○ more than 80% and less than 90%, Δ more than 70% and less than 80%, × less than 70% | | | | | | | | |

As shown in Tables 1-4, in all Examples, the molding shrinkage ratio was small, and molded articles having excellent moldability, coating properties and heat resistance were obtained.

On the other hand, in Comparative Examples 1-16, the addition ingredients and those amounts shown in Tables 5-6 were used. Along with Examples 1-32, the ingredients were mixed by using a double-cup type kneader, to thereby obtain unsaturated polyester resin compositions.

Resin I used in Comparative Examples 1-2, 4-10 and 12-16 is the same as those used in the Examples.

Resin IV used in Comparative Examples 3 and 11 comprises 80% by weight of an unsaturated polyester resin obtained by polycondensing maleic acid anhydride/propylene glycol at the ratio of 100mol/100mol, and 20% by weight of a styrene monomer as a crosslinking agent.

Further, along with the Examples, the molding shrinkage ratio, moldability, coating properties and heat resistance were evaluated.

These results of this measurement evaluation are shown in Tables 5-6.

**[Table5]**

| Table 5 | | | | | | | | | |
|---|---|---|---|---|---|---|---|---|---|
| | | Co-Ex.1 | Co-Ex. 2 | Co-Ex. 3 | Co-Ex. 4 | Co-Ex. 5 | Co-Ex. 6 | Co-Ex. 7 | Co-Ex. 8 |
| Resin I¹⁾ | | 71.5 | 71.5 | --- | 28.5 | 71.5 | 71.5 | 71.5 | 71.5 |
| Resin IV²⁾ | | --- | --- | 94 | --- | --- | --- | --- | --- |
| polystyrene (Mw=200,000) | | 15 | 15 | 15 | 15 | 7 | 42 | 30 | --- |
| styrene-butadiene block copolymer (Mw=300,000) | | 15 | 15 | 15 | 15 | 3 | 18 | --- | 30 |
| styrene monomer | | 28.5 | 13.5 | 4.7 | 51.5 | 23.5 | 23.5 | 28.5 | 13.5 |
| diallyl phthalate monomer | | --- | 15 | 1.3 | 20 | 5 | 5 | --- | 15 |
| t-butylperoxybenzoate | | 2 | 2 | 2 | 2 | 2 | 2 | 2 | 2 |
| Calcium carbonate | | 300 | 300 | 300 | 300 | 300 | 300 | 300 | 300 |
| Zinc stearate | | 7.5 | 7.5 | 7.5 | 7.5 | 7.5 | 7.5 | 7.5 | 7.5 |
| Chopped glass (6mm) | | 100 | 100 | 100 | 100 | 100 | 100 | 100 | 100 |
| Carbon black | | 2.5 | 2.5 | 2.5 | 2.5 | 2.5 | 2.5 | 2.5 | 2.5 |
| (b): (c) | | 0:100 | 30:70 | 5:95 | 25:75 | 10:90 | 10:90 | 0:100 | 30:70 |
| Parts by weight of (b)+(c) based on 100 parts by weight of (a)-(e) | | 38 | 38 | 19 | 62 | 45 | 31 | 38 | 38 |
| (d): (e) | | 50:50 | 50:50 | 50:50 | 50:50 | 70:30 | 70:30 | 50:50 | 50:50 |
| Parts by weight of (d)+(e) based on 100 parts by weight of (a)-(e) | | 23 | 23 | 23 | 23 | 9 | 38 | 23 | 23 |
| Molding shrinkage ratio (%) | | -0.021 | -0.015 | 0.00 | -0.03 | 0.01 | -0.07 | 0.05 | 0.03 |
| Test box appearance³⁾ | Colorability | ⊚ | ⊚ | ⊚ | ○ | ⊚ | Δ | ⊚ | Δ |
| | Leveling | ⊚ | ○ | ○ | Δ | × | ○ | ○ | Δ |
| | filling property | ⊚ | Δ | ○ | Δ | Δ | Δ | Δ | ×-Δ |
| Coating property⁴⁾ | Point | 5 | 9 | 6 | 9 | 9 | 6 | 5 | 9 |
| | Assessment | Δ | ⊚ | Δ | ⊚ | ⊚ | Δ | Δ | ⊚ |
| Heat resistance Bending strength⁵⁾ | retention (%) | 95 | 88 | 95 | 85 | 95 | 82 | 97 | 93 |
| | Assessment | ⊚ | ○ | ⊚ | ○ | ⊚ | ○ | ⊚ | ⊚ |

| | | | | | | | | | |
|---|---|---|---|---|---|---|---|---|---|
| 1) Styrene monomer content: 30wt% 2) Styrene monomer content: 20wt% 3) Test box appearance: ⊚ very good, ○ good, Δ inferior, × defect 4) Coating property assessment: ⊚ 9 or more, ○ 8-7, Δ 6-5, × 4 or less 5) Heat resistance assessment: ⊚ 90% or more, ○ more than 80% and less than 90%, Δ more than 70% and less than 80%, × less than 70% | | | | | | | | | |

**[Table 6]**

| Table 6 | | | | | | | | | |
|---|---|---|---|---|---|---|---|---|---|
| | | Co-Ex. 9 | Co-Ex. 10 | Co-Ex. 11 | Co-Ex. 12 | Co-Ex. 13 | Co-Ex. 14 | Co-Ex. 15 | Co-Ex. 16 |
| Resin I¹⁾ | | 71.5 | 71.5 | --- | 28.5 | 71.5 | 71.5 | 71.5 | 71.5 |
| Resin IV²⁾ | | --- | --- | 94 | --- | --- | --- | --- | --- |
| styrene-vinyl acetate block copolymer (Mw=200,000) | | 15 | 15 | 15 | 15 | 7 | 42 | 30 | --- |
| styrene-butadiene block copolymer (Mw=300,000) | | 15 | 15 | 15 | 15 | 3 | 18 | --- | 30 |
| styrene monomer | | 28.5 | 13.5 | 4.7 | 51.5 | 23.5 | 23.5 | 28.5 | 13.5 |
| diallyl phthalate monomer | | --- | 15 | 1.3 | 20 | 5 | 5 | --- | 15 |
| t-butylperoxybenzoate | | 2 | 2 | 2 | 2 | 2 | 2 | 2 | 2 |
| Calcium carbonate | | 300 | 300 | 300 | 300 | 300 | 300 | 300 | 300 |
| Zinc stearate | | 7.5 | 7.5 | 7.5 | 7.5 | 7.5 | 7.5 | 7.5 | 7.5 |
| Chopped glass (6mm) | | 100 | 100 | 100 | 100 | 100 | 100 | 100 | 100 |
| Carbon black | | 2.5 | 2.5 | 2.5 | 2.5 | 2.5 | 2.5 | 2.5 | 2.5 |
| (b): (c) | | 0:100 | 30:70 | 5:95 | 25:75 | 10:90 | 10:90 | 0:100 | 30:70 |
| Parts by weight of (b)+(c) based on 100 parts by weight of (a)-(e) | | 38 | 38 | 19 | 62 | 45 | 31 | 38 | 38 |
| (d): (e) | | 50:50 | 50:50 | 50:50 | 50:50 | 70:30 | 70:30 | 50:50 | 50:50 |
| Parts by weight of (d)+(e) based on 100 parts by weight of (a)-(e) | | 23 | 23 | 23 | 23 | 9 | 38 | 23 | 23 |
| Molding shrinkage ratio (%) | | -0.021 | -0.015 | 0.00 | -0.03 | 0.01 | -0.07 | 0.05 | 0.03 |
| Test box appearance³⁾ | Colorability | ⊚ | ⊚ | ⊚ | ○ | ⊚ | Δ | ⊚ | Δ |
| | Leveling | ⊚ | ○ | ○ | Δ | × | ○ | ○ | Δ |
| | filling property | ⊚ | Δ | ○ | Δ | Δ | Δ | A | ×-Δ |
| Coating property⁴⁾ | Point | 5 | 9 | 6 | 9 | 9 | 6 | 5 | 9 |
| | Assessment | Δ | ⊚ | Δ | ⊚ | ⊚ | Δ | Δ | ⊚ |
| Heat resistance Bending strength⁵⁾ | retention (%) | 95 | 88 | 95 | 85 | 95 | 82 | 97 | 93 |
| | Assessment | ⊚ | ○ | ⊚ | ○ | ⊚ | ○ | ⊚ | ⊚ |

| | | | | | | | | | |
|---|---|---|---|---|---|---|---|---|---|
| 1) Styrene monomer content: 30wt% 2) Styrene monomer content: 20wt% 3) Test box appearance: ⊚ very good, ○ good, Δ inferior, × defect 4) Coating property assessment: ⊚ 9 or more, ○ 8-7, Δ 6-5, × 4 or less 5) Heat resistance assessment: ⊚ 90% or more, ○ more than 80% and less than 90%, Δ more than 70% and less than 80%, × less than 70% | | | | | | | | | |

As shown in Tables 5 and 6, the unsaturated polyester resin compositions which do not comprise (d) a polystyrene and/or styrene-vinyl acetate block copolymer, and (e) a styrene-diene block copolymer and/or hydrogenated or modified styrene-diene block copolymer, could not obtain the molding shrinkage ratio, moldability, coating properties and heat resistance shown in Examples 1-32. Further, even if the unsaturated polyester resin compositions comprise (d) a polystyrene and/or styrene-vinyl acetate block copolymer, and (e) a styrene-diene block copolymer and/or hydrogenated or modified styrene-diene block copolymer, excellent molded articles could not be obtained with the unsaturated polyester resin compositions in which the addition amounts thereof were outside of the above specified range.

The unsaturated polyester resin compositions which do not comprise (b) a diallyl phthalate monomer or prepolymer, or which the addition amounts thereof were less than the above specified range, did not achieve the coating properties shown in the Examples. Further, even if the unsaturated polyester resin compositions comprise (b) a diallyl phthalate monomer or prepolymer, the unsaturated polyester resin compositions in which the addition amounts thereof were more than the above specified range could not achieve excellent moldability and heat resistance.

Therefore, it is clear that the molded articles obtained by the unsaturated polyester resin compositions of the present invention differ from conventional molded articles, and have excellent coating properties in addition to excellent surface smoothness, dimensional accuracy, moldability, heat resistance and mechanical strength.

Accordingly, the molded articles obtained by the unsaturated polyester resin composition of the present invention are remarkably useful in the field of lamp reflectors which require high surface smoothness, dimensional accuracy, moldability, heat resistance, mechanical strength and coating properties, such as automotive head lamps, etc., and can be used in a broad range.

## Claims

1. An unsaturated polyester resin composition for lamp reflectors comprising (a) an unsaturated polyester resin, (b) a diallyl phthalate monomer or prepolymer, (c) a radically polymerizable unsaturated monomer other than the diallyl phthalate monomer, (d) a polystyrene and/or a styrene-vinyl acetate block copolymer, and (e) a styrene-diene block copolymer and/or a hydrogenated or modified styrene-diene block copolymer, **characterized in that** the composition comprises from 20 to 60 parts by weight of (b) and (c), and from 13 to 34 parts by weight of (d) and (e) based on 100 parts by weight of (a), (b), (c), (d) and (e), and the ratio by weight of (b) to (c) is 5:95 to 25:75, and the ratio by weight of (d) to (e) is 20:80 to 80:20.

2. An unsaturated polyester resin composition for lamp reflectors according to Claim 1, **characterized in that** said (a) unsaturated polyester resin is obtained by polycondensing a total of 100 moles consisting of 20 to 50 moles of propylene glycol, 25 to 65 moles of neopentyl glycol and 15 to 25 moles of bisphenol A or hydrogenated bisphenol A based on 100 moles of at least one unsaturated polybasic acid selected from a group consisting of fumaric acid and maleic anhydride.

3. A molded article obtained by molding the unsaturated polyester resin compositions for lamp reflectors according to Claim 1 or 2.

## Patentansprüche

1. Ungesättigte Polyesterharzzusammensetzung für Lampenreflektoren, umfassend (a) ein ungesättigtes Polyesterharz, (b) ein Diallylphthalatmonomer oder -Präpolymer, (c) ein radikalisch polymerisierbares ungesättigtes Monomer, das sich von dem Diallylphthalatmonomer unterscheidet, (d) ein Polystyrol- und/oder ein Styrol-Vinylacetat-Blockcopolymer und (e) ein Styrol-Dien-Blockcopolymer und/oder ein hydriertes oder modifiziertes Styrol-Dien-Blockcopolymer, **dadurch gekennzeichnet, dass** die Zusammensetzung von 20 bis 60 Gew.-Teile (b) und (c) und von 13 bis 34 Gew.-Teile von (d) und (e) umfasst, bezogen auf 100 Gew.-Teile von (a), (b), (c), (d) und (e), und worin das Gewichtsverhältnis von (b) zu (c) 5:95 bis 25:75 beträgt und das Gewichtsverhältnis von (d) zu (e) 20:80 bis 80:20 beträgt.

2. Ungesättigte Polyesterharzzusammensetzung für Lampenreflektoren gemäß Anspruch 1, **dadurch gekennzeichnet, dass** (a) das ungesättigte Polyesterharz erhalten wird durch Polykondensieren einer Gesamtheit von 100 mol, die aus 20 bis 50 mol Propylenglycol, 25 bis 65 mol Neopentylglycol und 15 bis 25 mol Bisphenol A oder hydriertem Bisphenol A bestehen, bezogen auf 100 mol von zumindest einer ungesättigten mehrbasigen Säure, ausgewählt ist aus der Gruppe, bestehend aus Fumarsäure und Maleinsäureanhydrid.

3. Geformter Artikel, erhalten durch Formen der ungesättigten Polyesterharzzusammensetzungen für Lampenreflektoren gemäß den Ansprüchen 1 oder 2.

## Revendications

1. Composition de résine de polyester insaturé pour des réflecteurs de lampes comprenant (a) une résine de polyester insaturé, (b) un monomère ou pré-polymère de type phtalate de diallyle, (c) un monomère insaturé radicalement polymérisable autre que le monomère de type phtalate de diallyle, (d) un copolymère en bloc de polystyrène et/ou styrène-vinyle et (e) un copolymère en bloc de styrène-diène et/ou un copolymère en bloc de styrène-diène hydrogéné ou modifié, **caractérisé en ce que** la composition comprend de 20 à 60 parts en poids de (b) et (c) et de 13 à 34 parts en poids de (d) et (e) sur la base de 100 parts en poids de (a), (b), (c), (d) et (e), et que le rapport en poids de (b) à (c) est 5:95 à 25:75 et le rapport en poids de (d) à (e) est 20:80 à 80:20.

2. Composition de résine de polyester insaturé pour des réflecteurs de lampes selon la revendication 1, **caractérisé en ce que** la résine de polyester insaturé (a) est obtenue en réalisant une polycondensation d'un total de 100 moles constituées de 20 à 50 moles de propylène glycol, 25 à 65 moles de néopentylglycol et 15 à 25 moles de bisphénol A ou bisphénol A hydrogéné sur la base de 100 moles d'au moins un acide polybasique insaturé choisi dans un groupe formé par de l'acide fumarique et l'anhydride maléique.

3. Article moulé obtenu en moulant les compositions de résine de polyester insaturé pour des réflecteurs de lampes selon la revendication 1 ou 2.
